# EUROPEAN PATENT SPECIFICATION

(11) **EP 2 204 265 B1**
(45) Date of publication and mention of the grant of the patent: **07.05.2014**
(21) Application number: 09179503.9
(22) Date of filing: 16.12.2009
(51) Int. Cl.: B25B 23/00

(54) **Universal joint**
Kardangelenk
Joint universel

(30) Priority: 06.01.2009 TW 98100213
(43) Date of publication of application: 07.07.2010
(73) Proprietor: Hu, Bobby, Taichung (TW)
(72) Inventor: Hu, Bobby, Taichung (TW)
(74) Representative: Viering, Jentschura & Partner Patent- und Rechtsanwälte

(56) References cited:
- DE-A1- 2 419 931
- US-A- 4 936 701
- US-A1- 2003 110 907
- US-A1- 2005 016 331

## Description

The present invention relates to a universal joint and, more particularly, to a universal joint including a control member for locking an object such as a socket without the risks of injuring a hand of an operator and avoiding damage to the control member due to impingement by an external object when the universal joint is driven by a power drive.

A typical tool for applying rotational force can be coupled with a socket to rapidly tighten or loosen fasteners in an engine compartment of a vehicle. An extension can be coupled between the tool and the socket to reach a fastener difficult to access. In cases the rotating axis of the fastener is not coincident to the driving axis of the tool, an adaptor such as a universal joint is required.

U.S. Patent No. 6,092,441 discloses an articulating adapter including first and second drive sections. One of the first and second drive sections is attached to a socket wrench drive while the other is attached to a socket by a spring-based ball. The first drive section has a square drive at a first end and a skirt section at a second end. The second drive section includes a square drive at a first end and a rounded base section at a second end. The rounded base section includes an oval shaped bore and is pivotally seated in a cavity in the skirt section of the first drive section. A pivot pin extends through the skirt section of the first drive section and the bore of the second drive section. Thus, the rotating axis of the socket can be at an angle with the driving axis of the power drive by providing the articulating adapter during tightening or loosening of a fastener. An annular collar is provided between the square drive and the rounded base of the second drive section. However, the annular collar is too small to be firmly gripped by the fingers of the operator during tightening or loosening of the fastener, such that the whole articulating adapter wobbles. If an extra element is added to stabilize the articulating adapter, the extra element would injure the hand of the operator during rotation of the articulating adapter and would adversely affect the torque capacity at the annular collar. Furthermore, when the spring biasing the ball for securely coupling the socket has a low elastic coefficient, the coupling force imparted to the ball will be too high, leading to difficulties in coupling or disengaging the socket with or from the articulating adapter. On the other hand, if the spring biasing the ball for securely coupling the socket has a high elastic coefficient, the coupling force imparted to the ball will be too small. As a result, the socket is liable to vibrate and disengage from the articulating adapter when the power drive rotates and, thus, creates vibration.

Thus, a need exists for a universal joint that can operate stably during operation and that has reinforced structural strength while preventing injury to the hand of the operator.

US 4 936 701 A discloses a universal joint with rotating holder sleeve, US 2003/0110907 A1 discloses a wrench extension with a socket-coupling system, DE 24 19 931 A1 discloses an angled socket wrench, and US 2005/0016331 A1 discloses a protective sleeve for use with an extension bar.

The present invention provides a universal joint as defined in claim 1. Further embodiments of the present invention are described in the dependent claims.

Thus, the present invention solves the above need and other problems in the field of stable and safe operation by providing a universal joint including a coupling member having first and second end portions spaced along a first axis. The first end portion of the coupling member is adapted to be coupled to a power drive. A body includes a rounded base and a drive column spaced along a second axis. The rounded base is pivotably mounted to the second end portion of the coupling member about a pivot axis perpendicular to the first axis, allowing adjustment in an angle between the first and second axes. The body further includes a reinforcing section intermediate the rounded base and the drive column along the second axis. The reinforcing section includes an outer periphery about the second axis. The outer periphery of the reinforcing section includes a recessed portion having a receptacle extending in a radial direction perpendicular to the second axis. The drive column includes a bore extending along the second axis and in communication with the receptacle.

The drive column further includes a detent hole extending in a transverse direction transverse to and in communication with the bore. A mover is movably received in the bore along the second axis. A detent member is movably received in the detent hole in the transverse direction. The detent member is operably connected to the mover so that movement of the mover along the second axis allows movement of the detent member in the transverse direction between a protruded position at least partially outside of the detent hole and a retracted position in the detent hole. Reversely, movement of the detent member towards the second axis, if allowed by the mover, may cause a movement of the mover along the second axis.

The drive column is adapted to couple with an object to be driven when the detent member protrudes out of the detent hole. The drive column is disengageable from the object when the detent member is received in the detent hole. A control member is moveably received in the receptacle between first and second positions spaced in the radial direction. The control member includes inner and outer ends spaced in the radial direction. The outer end of the control member in the first position has a first spacing to the second axis in the radial direction larger than a second spacing from the outer end of the control member in the second position to the second axis in the radial direction. The first spacing is substantially not larger than a third spacing from the outer periphery of the reinforcing section to the second axis in the radial direction. The inner end of the control member is operably engaged with the mover, so that movement of the control member in the radial direction between the first and second positions allows movement of the detent member in the transverse direction between the protruded position and the retracted position through movement of the mover along the second axis.

In the most preferred form, the control member further includes a stepped groove intermediate the inner and outer ends in the radial direction. The stepped groove includes first and second sliding faces and first and second abutting faces. The first and second sliding faces are parallel to each other and extend in a direction transverse and preferably inclined, e.g. by 45 degree to the radial direction. The first and second abutting faces are parallel to each other and extend in a direction transverse to the first and second sliding faces, and, preferably, in parallel to the radial direction. The second sliding face is intermediate the first and second abutting faces both, in the radial direction and in parallel to the second axis. The second abutting surface is intermediate the first and second sliding faces both, in the radial direction and in parallel to the second axis. The second abutting face is intermediate the second sliding face and the outer end of the control member in the radial direction. The first sliding face is intermediate the first abutting face and the inner end of the control member in the radial direction. The mover includes first and second end portions spaced along the second axis. The second end portion of the mover is moveably received in the groove of the control member. The second end portion of the mover includes a pressing face in parallel to the first and second abutting faces, and a third sliding face in parallel to the first and second sliding faces. A spring is received in the receptacle of the reinforcing section between the inner end of the control member and a bottom of the receptacle and biases the control member to the first position. When the control member is in the first position, the third sliding face slidably abuts the first sliding face, and the pressing face is spaced from the first abutting face parallel to the second axis. When the control member is in the second position, the third sliding face slidably abuts the second sliding face. The detent member protrudes out of the detent hole when the third sliding face abuts the first sliding face and when the pressing face abuts the first abutting face, preventing the object from disengaging from the drive column.

The present invention will be further illustrated in light of the following detailed description of illustrative embodiments of this invention described in connection with the drawings.

The illustrative embodiments may best be described by reference to the accompanying drawings where:

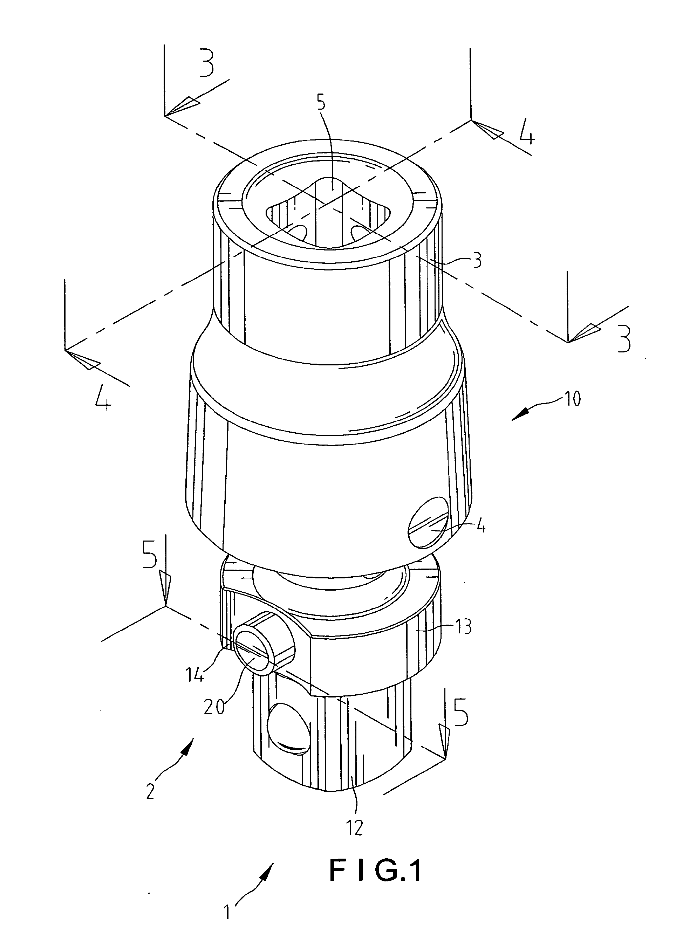

FIG. 1 shows a perspective view of a universal joint according to the preferred teachings of the present invention.
FIG 2 shows an exploded, perspective view of the universal joint of FIG 1.
FIG 3 shows a cross sectional view of the universal joint of FIG 1 according to section line 3-3 of FIG 1.
FIG. 4 shows a cross sectional view of the universal joint of FIG 1 according to section line 4-4 of FIG 1, i.e. perpendicular to the sectional plane of Fig. 3, with a control member in a first locking position.
FIG. 5 shows a cross sectional view of the universal joint of FIG 1 according to section line 5-5 of FIG. 1 with the control member in the first locking position.
FIG. 6 shows a cross sectional view of the universal joint of FIG. 1 according to section line 5-5 of FIG 1 with the universal joint held by an operator at a reinforced section and with the control member in the first locking position.
FIG 7 shows a cross sectional view of the universal joint of FIG. 1 with the control member in a second locking position.
FIG. 8 shows a cross sectional view of the universal joint of FIG. 7 according to section line 4-4 of FIG. 1.
FIG. 9 shows a cross sectional view of the universal joint of FIG. 1 according to section line 4-4 of FIG 1 with the control device in a releasing position.
FIG. 10 shows a cross sectional view of the universal joint of FIG 9 according to section line 4-4 of FIG 1.

All figures are drawn for ease of explanation of the basic teachings of the present invention only; the extensions of the figures with respect to number, position, relationship, and dimensions of the parts to form the preferred embodiments will be explained or will be within the skill of the art after the following teachings of the present invention have been read and understood. Further, the exact dimensions and dimensional proportions to conform to specific force, weight, strength, and similar requirements will likewise be within the skill of the art after the following teachings of the present invention have been read and understood.

Where used in the various figures of the drawings, the same numerals designate the same or similar parts. Furthermore, when the terms "first" "second", "third", "fourth", "fifth", "sixth", "inner", "outer", "slide", "end", "portion", "section", "radial", "inward", "spacing", "length", and similar terms are used herein, it should be understood that these terms have reference only to the structure shown in the drawings as it would appear to a person viewing the drawings and are utilized to facilitate describing the invention.

A universal joint according to the preferred teachings of the present invention is shown in the drawings and generally designated 10. According to the preferred form shown, universal joint 10 includes a body 1, a control device 2, and a coupling member 3. Coupling member 3 includes first and second end portions 31 and 33 spaced along a first axis 52. First end portion 31 of coupling member 3 includes an axial coupling hole 5 for coupling with a tool including but not limited to a pneumatic or electric tool, so that coupling member 3 can be driven by the tool. Second end portion 33 of coupling member 3 includes an axial compartment 32 having an outer section 36 and an inner section 34 intermediate outer section 36 and coupling hole 5 along first axis 52.

In the preferred form shown, body 1 includes a rounded base 11 and a drive column 12 spaced along a second axis 54. The rounded base 11 is preferably spherical and pivotably received in outer section 36, that is preferably hollow spherical, about a pivot axis 56 perpendicular to first axis 52, allowing adjustment in a plurality of angles between first and second axes 52 and 54. Body 1 further includes a reinforcing section 13 intermediate rounded base 11 and drive column 12 along second axis 54. Reinforcing section 13 is substantially cylindrical and includes an outer periphery about second axis 54. The cylindrical outer periphery of reinforcing section 13 includes a swallow recessed portion 14 of a concavely curved configuration having a preferably cylindrical receptacle 131 extending in a radial direction of reinforcing section 13 and drive column 12 from the bottom of recessed portion 14 and perpendicular to second axis 54. Reinforcing section 13 has an axial length T2 along second axis 54.

In the preferred form shown, rounded base 11 includes a through-hole 111. A pin 4 defines pivot axis 56 and extends through second end portion 33 of coupling member 3 along pivot axis 56 and through through-hole 111, pivotably connecting rounded base 11 to second end portion 33 of coupling member 3. A spring 6 is received in inner section 34 and biases rounded base 11 away from inner section 34. In the most preferred form shown, through-hole 111 of rounded base 11 includes first and second sectors 116 on opposite sides of second axis 54 and an intermediate section 118 along second axis 54 and intermediate between first and second sectors 116. First sector 116 has hollow oval cross sections and includes first and second sidewalls 113 and 114 spaced along second axis 54. Second sidewall 114 of first sector 116 is intermediate first sidewall 113 of first sector 116 and reinforcing section 13 along second axis 54. Second sector 116 has hollow oval cross sections and includes third and fourth sidewalls 113 and 114 spaced along the second axis. Third sidewall 113 of second sector 116 is intermediate fourth sidewall 114 of second sector 116 and reinforcing section 13 along second axis 54. The long dimensions of oval cross sections of sectors 116 extended parallel to second axis 54. First sidewall 113 of first sector 116 is perpendicular to fourth sidewall 114 of second sector 116. Second sidewall 114 of first sector 116 is perpendicular to third sidewall 113 of second sector 116. First sidewall 113 of first sector 116 is parallel to and spaced from third sidewall 113 of second sector 116 and at an acute angle with second axis 54. Second sidewall 114 of first sector 116 is parallel to and spaced from fourth sidewall 114 of second sector 116 and at an acute angle with second axis 54 the same as that between first sidewall 113 of first sector 116 and second axis 54. Therefore, first and second sectors are hollow conical with oval cross sections and meet each other at intermediate section 118 to be open to each other.

In the preferred form shown, drive column 12 is square in cross section and includes a cylindrical bore 121 extending along second axis 54 and in open communication with receptacle 131. Drive column 12 further includes a detent hole 122 extending in a transverse direction transverse to and in communication with bore 121.

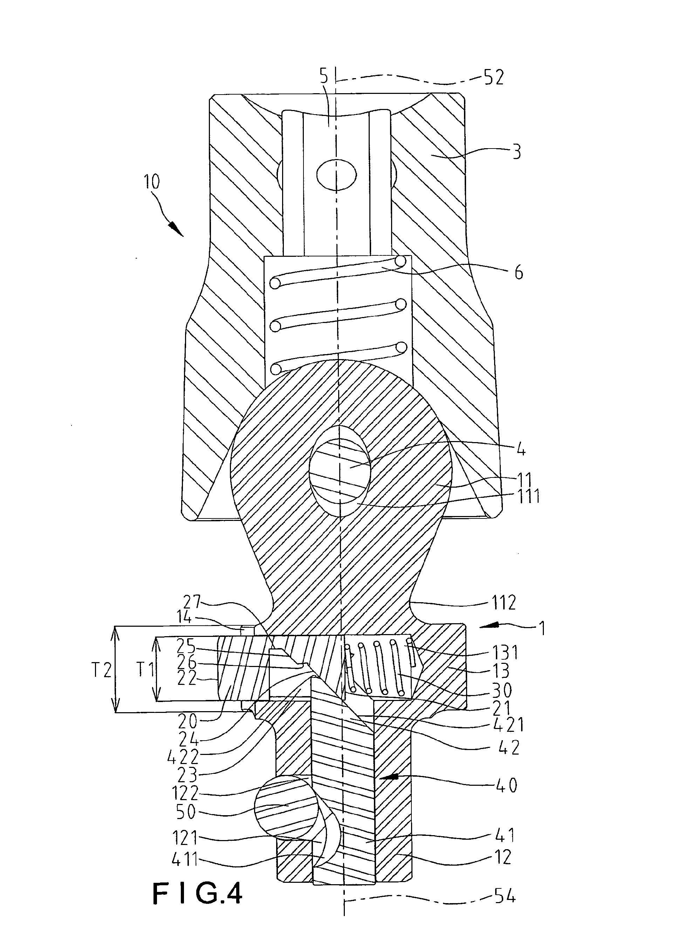

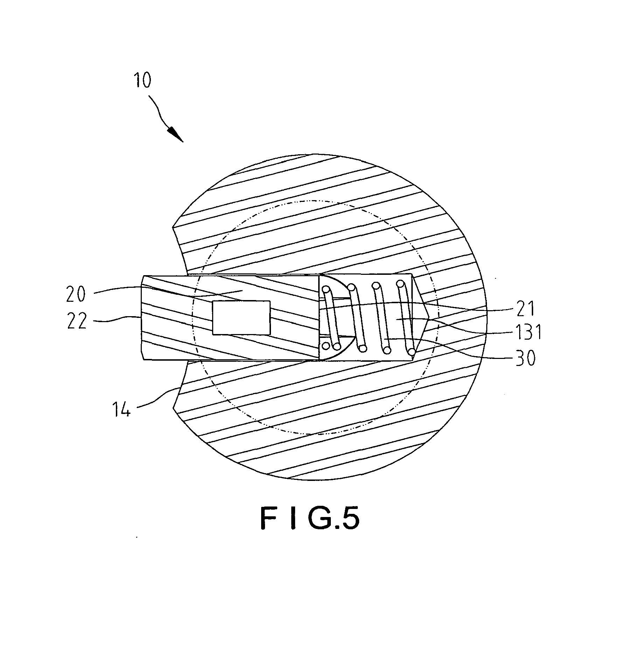

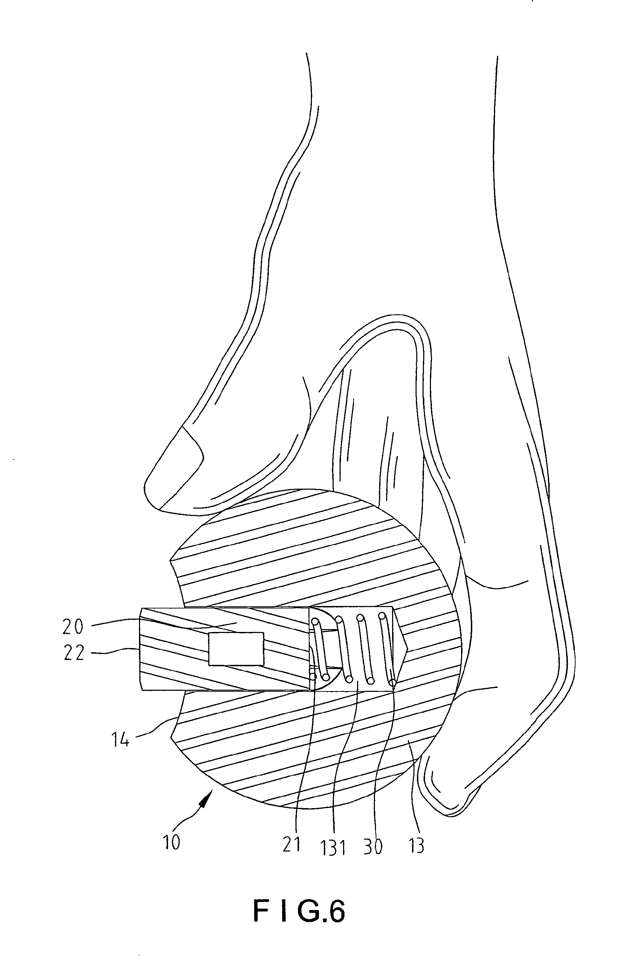

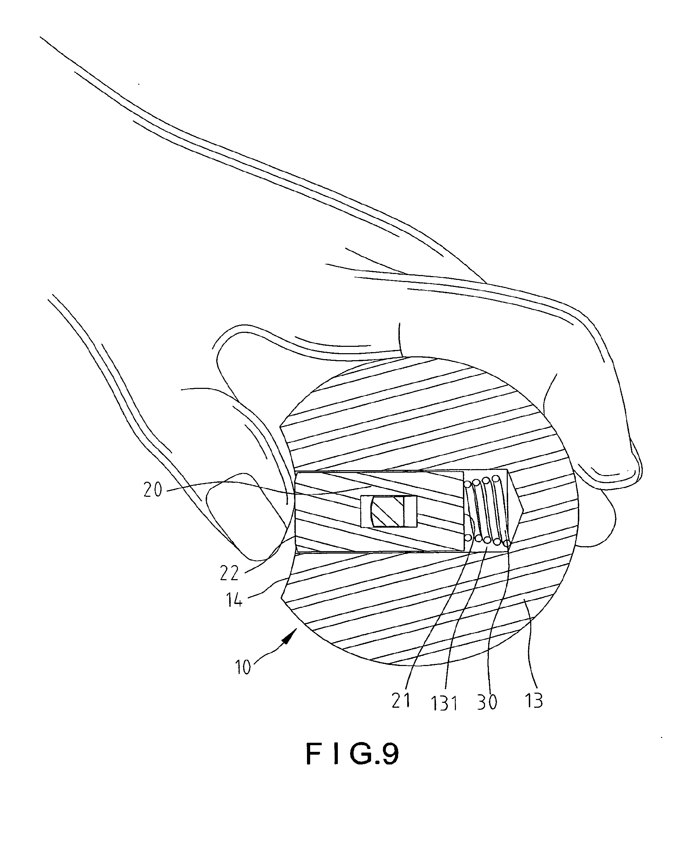

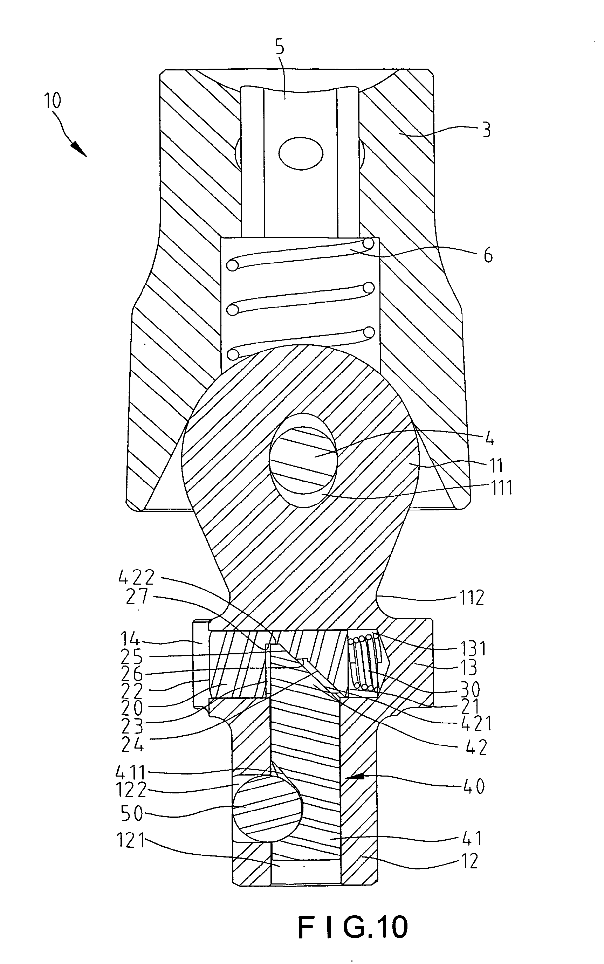

In the preferred form shown, universal joint 10 further includes a control device 2 including a preferably cylindrical control member 20 received in receptacle 131 to be slidable between first and second positions spaced in the radial direction of reinforcing section 13 and. Control member 20 includes inner and outer ends 21 and 22 spaced in the radial direction, i.e. in the direction perpendicular to the second axis 54. Outer end 22 of control member 20 in the first position (Figs. 4 to 6) has a first spacing to second axis 54 in the radial direction larger than a second spacing from outer end 22 of control member 20 in the second position (Figs. 9 and 10) to second axis 54 in the radial direction. The first spacing is substantially not larger than a third spacing from the outer cylindrical periphery of reinforcing section 13 to second axis 54 in the radial direction. Outer end 22 of control member 20 has a cross sectional length T1 along the second axis 54 smaller than axial length T2 of reinforcing section 13. A spring 30 is received in receptacle 131 of reinforcing section 13 between control member 20 and the bottom of receptacle 131 and has an end abutting said bottom and an end abutting inner end 21 of control member 20 for biasing outer end 22 of control member 20 to the first position.

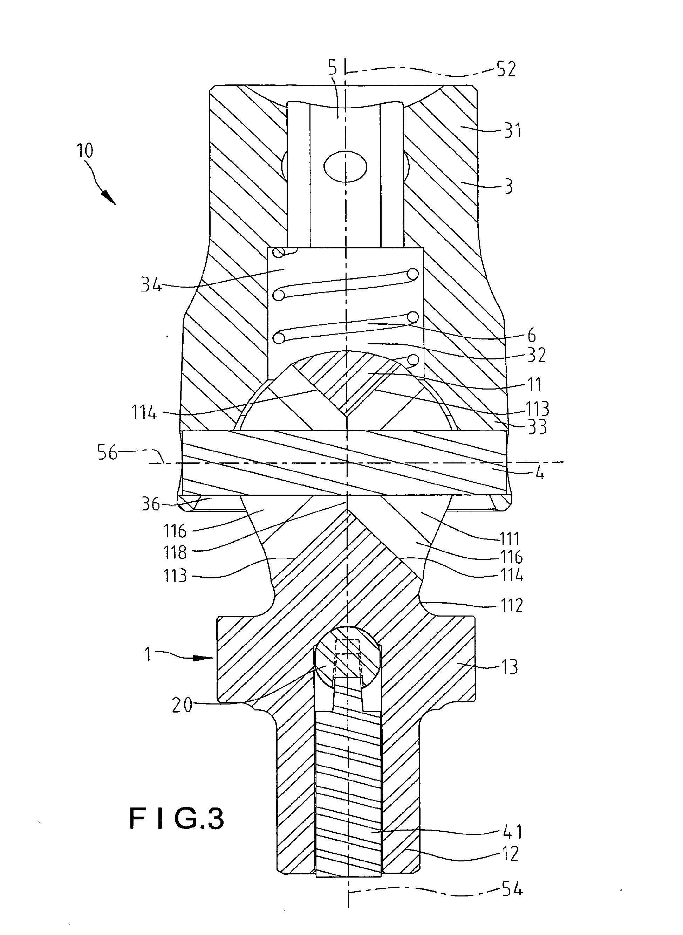

In the preferred form shown, control member 20 further includes a stepped groove 23 intermediate inner and outer ends 21 and 22 in the radial direction, i.e. in the direction perpendicular to the second axis 54. Stepped groove 23 includes first and second sliding faces 24 and 25 and first and second abutting faces 26 and 27. Groove 23 being closed at three sides both, in axial section (Fig. 4) and radial cross section (Fig. 3). Specifically, first and second sliding faces 24 and 25 are parallel to each other and each extend in a direction transverse to the radial direction at an acute angle of preferably 45 degree with second axis 54. First and second abutting faces 26 and 27 are parallel to each other and extend in a direction transverse to first and second sliding faces 24 and 25 and parallel to the axis of control member 20. Second sliding face 25 is intermediate first and second abutting faces 26 and 27 in the radial direction of reinforcing section 13 and extend in the direction perpendicular to second axis 54. First abutting surface 26 is intermediate first and second sliding faces 24 and 25 in the radial direction of reinforcing section 13 and extend in the direction perpendicular to second axis 54. Second abutting face 27 is intermediate second sliding face 25 and outer end 22 of control member 20 in the radial direction of reinforcing section and extend in the direction perpendicular to the second axis 54. First sliding face 24 is intermediate first abutting face 26 and inner end 21 of control member 20 in the radial direction of reinforcing section 13. In the most preferred form shown, each of first and second abutting faces 26 and 27 is planar and extends in the radial direction, i.e. in the direction perpendicular to the second axis 54. Second sliding face 25 is interconnected between first and second abutting faces 26 and 27. First abutting surface 26 is interconnected between first and second sliding faces 24 and 25. Each of first and second sliding faces 24 and 25 is at a first acute angle with the radial direction of reinforcing section 13 and at a second acute angle preferably of 45 degree with second axis 54.

In the preferred form shown, a mover 40 is movably received in bore 121 along second axis 54. Preferably, mover 40 has a substantially cylindrical shape. Mover 40 includes first and second end portions 41 and 42 spaced along second axis 54. First end portion 41 of mover 40 includes a combined groove 411 on an outer periphery thereof. Combined groove 411 is shown in the preferred embodiment to be a hollow spherical recess that is extended on a side facing the first end portion 42 of mover 40 along a tangent to the hollow spherical part of the recess to form an oblique sliding face that is parallel to sliding faces 24 and 25 (see fig. 4). Therefore, combined groove 411 has a combined bottom of a hollow spherical portion in a direction opposite to control number 20 and an obliquely inclined portion facing control member 20.

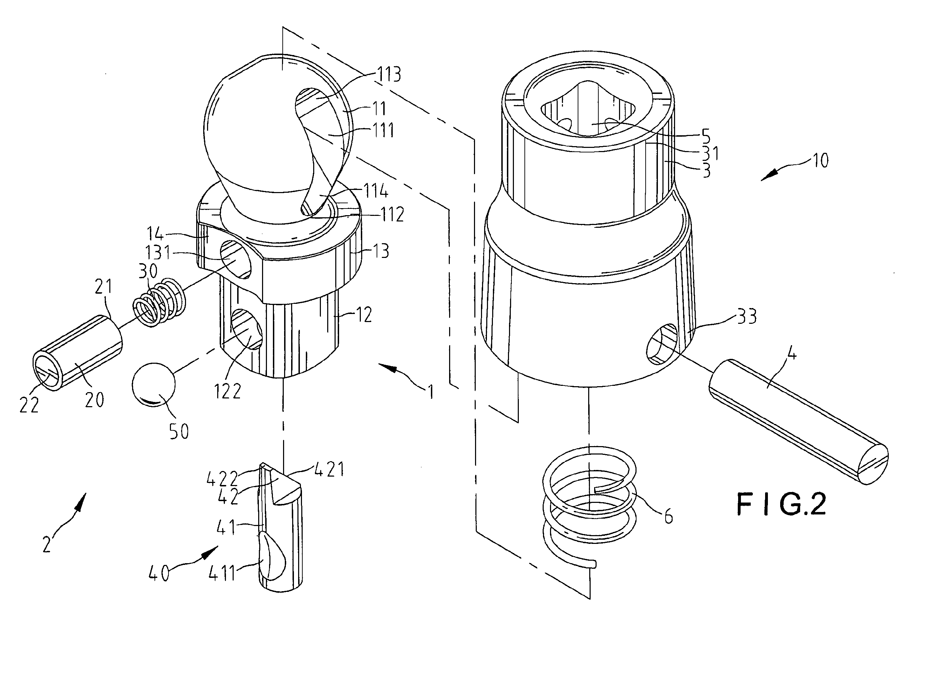

Second end portion 42 of mover 40 is moveably received in groove 23 of control member 20. Second end portion 42 of mover 40 includes a pressing face 422 and a third sliding face 421. Third sliding face 421 of mover 40 obliquely extends from pressing face 422 toward first end portion 41 of mover 40. Pressing face 422 is planar and perpendicular to second axis 54 and parallel to the first and second abutting faces 26 and 27. Third sliding face 421 is planar and at a third acute angle with the radial direction of reinforcing section 13 and at a fourth acute angle with second axis 54. The third acute angle is equal to the first acute angle of first and second sliding faces 24 and 25 with the radial direction of reinforcing section 13, and the fourth acute angle is equal to the second acute angle of first and second sliding faces 24 and 25 with second axis 54. The end of the second end portion 42 of mover 40 has a maximum cross sectional area smaller than the cross sectional area of first end portion 41 of mover 40 as shown in Fig. 2.

According to an embodiment of the invention, the second end portion 42 of the mover may comprise an engaging portion having a smaller cross section (as shown in Fig. 2 and 3). The engaging portion engages the groove 23 of control member 20 such that the engaging portion is movable relative to the longitudinal direction of the groove 23. The engaging portion may comprise two plane side surfaces arranged with a distance from each other, the two side surfaces extend in the direction of the second axis 54 and each radially shifted from the outer periphery of the mover 40 in the direction to the second axis 54. The two side surfaces may extend in parallel to each other, or may extend such that the distance of the two side surfaces from each other at the free end of the second end portion 42 is smaller than at the foot end of the engaging portion (see Fig. 3). A wall portion of the outer periphery of the mover 40 extends between the two side surfaces in longitudinal direction of the mover 40 at one of the sides of the engaging portion and the third sliding face 421 extends between the two side surfaces at the side opposite to said wall portion of the outer periphery. The third sliding face 421 is planar and at a third acute angle with the radial direction, i.e. with the longitudinal direction of the control member 20, and at a fourth acute angle with second axis 54. The pressing face 422 which extends substantially perpendicular to the second axis 54 is encircled by the respectively free ends of the two side surfaces, the wall portion of the outer periphery and the third sliding face 421.

In the preferred form shown, a detent member 50 in the most preferred form shown as a spherical ball is movably received in detent hole 122 in the transverse direction of a drive column. Detent member 50 is slideably coupled in combined groove 411 of mover 41 and, thus, operably connected to mover 40 so that movement of mover 40 in the direction of second axis 54 opposite to end portion 42 allows movement of detent member 50 in the transverse direction between a protruded position at least partially outside of detent hole 122 and a first or second retracted position in detent hole 122. Inner end 21 of control member 20 is operably engaged with mover 40 on first or second sliding faces 24 or 25 under the force of spring 30, so that first and second sliding faces 24 and 25, respectively, are released from third sliding face 421 by a movement of control member 20 in the radial direction of reinforcing section 13 between the first and second positions to allow movement of detent member 50 in the transverse direction between the protruded position and the retracted position through movement of mover 40 along second axis 54. When detent member 50 protrudes out of detent hole 122 (Fig. 4), drive column 12 can be coupled with an object, including but not limited to a socket, to be driven. Drive column 12 can be disengaged from the object when detent member 50 is received in detent hole 122 (Fig. 10).

As shown in Fig. 4, for example, the combined groove 411 which is formed into the peripheral wall of the mover 40 can be a longitudinal groove extending in the longitudinal direction of the mover 40. The bottom of the groove may have the shape of a non-uniform bent curved path which extends between the one end of the groove 411 which faces the first end portion 41 of the mover 40 to be hollow spherical and the other end of the groove 411 which faces the second end portion 42 of the mover 40 to be inclined, wherein the groove 411 at the one end which faces the first end portion 41 comprises its greatest depth which becomes steadily smaller in the direction to the other end which faces the second end portion 41, wherein the greatest depth of the groove 411 corresponds at least to the thickness of the detent member less the depth of the detent hole 122.

Now that the basic construction of universal joint 10 of the preferred teachings of the present invention has been explained, the operation and some of the advantages of universal joint 10 can be set forth and appreciated. In particular, for the sake of explanation, it will be assumed that control member 2 is in the first position (FIGS. 4-6). Third sliding face 421 abuts first sliding face 24 under the action of spring 30, and pressing face 422 is axially spaced from first abutting face 26 along second axis 54. Note that outer end 22 of control member 20 is substantially received in recessed portion 14 of reinforcing section 13 without protruding beyond the cylindrical outer periphery of reinforcing section 13. Furthermore, detent member 50 has been moved by the oblique sliding face of combined groove 411 of mover 40 to protrude out of detent hole 121, allowing coupling of drive column 12 with the object to be driven. First end portion 31 of coupling member 3 is coupled to a tool for driving the object. An operator can hold universal joint 10 by reinforcing section 13 during coupling operation of the tool. Thus, control member 20 in this state is in a first locking position reliably preventing the object from disengaging from drive column 12.

In normal operation of universal joint 1, first axis 52 of coupling member 3 is coaxial with second axis 54 of body 1, so that first axis 52 of coupling member 3 is coaxial with the rotating axis of the object to be driven. However, coupling member 3 can be pivoted relative to body 1 about pivot axis 56 defined by pin 4 so that first axis 52 of coupling member 3 can be at an angle up to 45° with the rotating axis of the object, which is useful when the object is in a location difficult to access. This angle of 45° is larger than that achievable by conventional designs, allowing wider application of universal joint 10 according to the preferred teachings of the present invention.

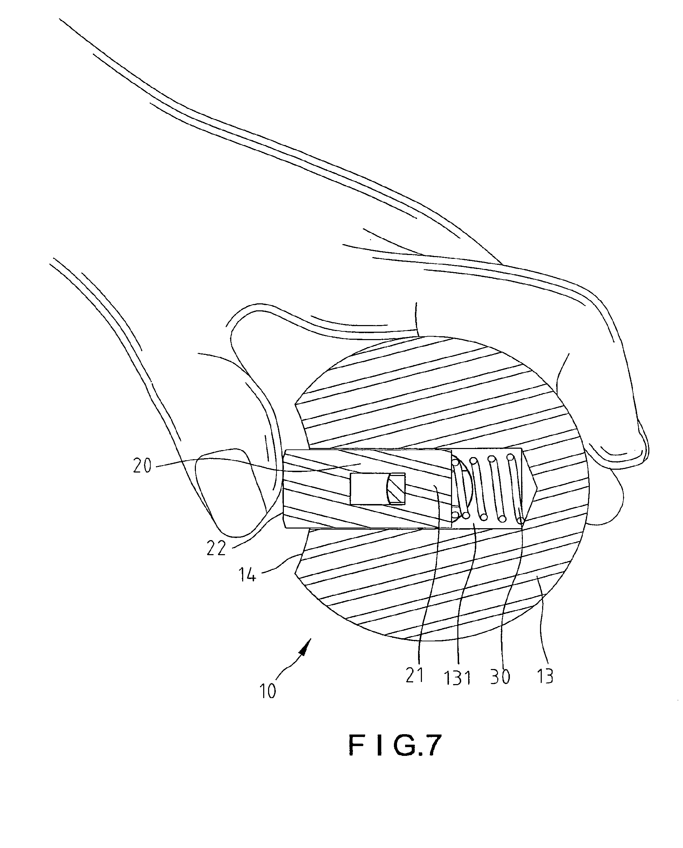

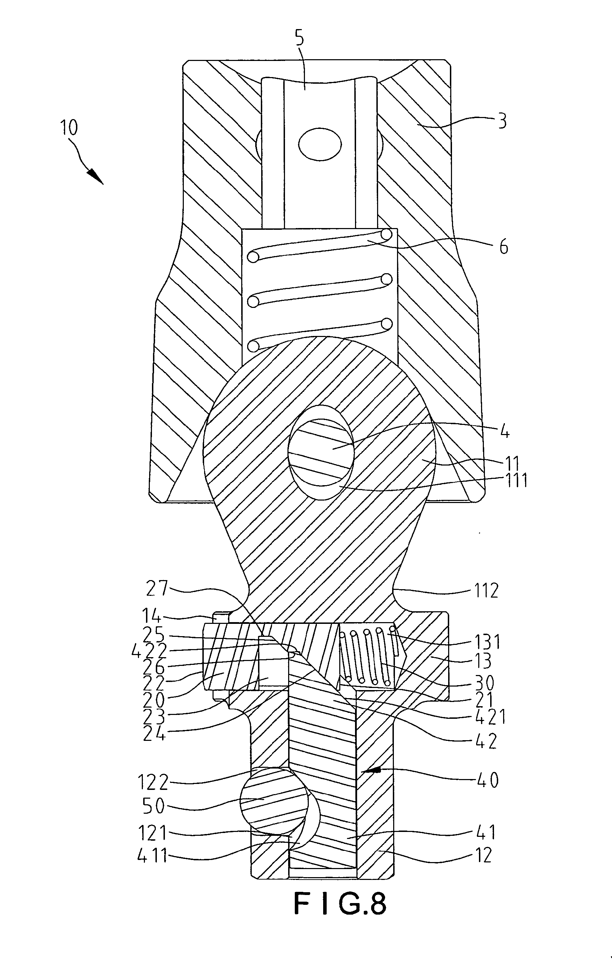

The operator can press control member 20 thereby releasing first sliding face 24 from third sliding face 421, so that mover 40 may be moved by detent 50 when the latter is pressed against the oblique sliding face of the combined groove 411, until third sliding face 421 abuts first sliding face 24 and pressing face 422 abuts first abutting face 26 (FIGS. 7 and 8). Note that detent member 50 is partially received in combined groove 411 but still protrudes out of detent hole 122, preventing the object from disengaging from drive column 12. Thus, control member 20 in this state is in a second locking position reliably preventing the object from disengaging from drive column 12.

Control member 20 could be moved from the first locking position (Fig. 4) to the second locking position (Fig. 8) during operation. Specifically, universal joint 10 can be subjected to a pulling force during operation of the tool. The force can be imparted to control member 20 and/or the object such that detent member 50 is urged towards mover 40, mover 40 to be urged toward control member 20, causing third sliding face 421 of mover 40 to slide relative to first sliding face 24 of control member 20 until pressing face 422 abuts first abutting face 26. Further sliding movement of mover 40 relative to control member 20 into groove 23 is then prevented by first abutting face 26. Thus, detent member 50 will remain partially received in combined groove 411 but still protrude out of detent hole 122, preventing the object from disengaging from drive column 12.

The operator can press control member 20 to the second position that is a releasing position (Fig. 9 and 10) in which pressing face 422 comes free from first abutting face 26 to allow the object to be pulled away from drive column 12 to be disengaged from drive column 12. Spring 30 is compressed by inner end 21 of controller member 20. Pressing face 422 of mover 40 becomes disengaged from first abutting face 26 of control member 20, so that mover 40 can be further moved by a pressing force of detent 50 on the oblique sliding face of the combined groove 411. Further movement of mover 40 results in that third sliding face 421 of mover 40 comes in contact with and is slided on second sliding face 25 of control member 20 until pressing face 421 of mover 40 comes in contact with and is stopped by second abutting face 27 of control member 20. Thus, detent member 50 can be completely moved into combined groove 411 of mover 40 while mover 40 slides inward into groove 23 of control member 20 along the second axis. Note that the thumb of the hand of the operator pressing control member 20 is received in recessed portion 14 of reinforcing section 13 while the other fingers of the hand are gripping the outer periphery of reinforcing section 13. Although outer end 22 of control member 20 in the most preferred form shown is completely received in receptacle 131 of reinforcing section 13 when control member 20 is in the second position, outer end 22 of control member 20 can be in recessed portion 14 when control member 20 is in the second position.

When releasing control member 20, second sliding face 25 is pressed against third sliding face 421 of the mover 40, so that mover 40 may be pressed down again by the force of compressed spring 30 from the position in Fig. 10 into the position in Fig. 4. Further, pressing face 411 of mover 40 may be smaller than second abutting face 27, so that a small gap of groove 23 of control member 20 may be left between a side of second and portion 42 of mover 40 and the adjacent side wall of groove 23 as shown in Fig. 10. Therefore, control member 20 could be pushed again into the second position to release second sliding face 25 from third sliding face 431 of mover 40. Since outer end 22 of control member 20 never protrudes outward away from reinforcing section 13 beyond recessed portion 14, injury to the hand of the operator and damage to control member 20 during rotation of universal joint 10 is avoided. Recessed portion 14 provides a room allowing easy operation by the operator. Since length T1 of control member 20 is smaller than length T2 of reinforcing section 13, reinforcing section 13 possess a structural strength sufficient to withstand torque imparted to drive column 12 and rounded base 11.

Now that the basic teachings of the present invention have been explained, many extensions and variations will be obvious to one having ordinary skill in the art. For example, pressing face 422 of mover 40 does not have to abut second abutting face 27 of control member 20 when control member 20 is in the second position. Furthermore, the pivotal connection between second end portion 33 of coupling member 3 and rounded base 11 of body 1 can be achieved in other arrangements.

## Claims

1. A universal joint comprising, in combination:
a coupling member (3) including first and second end portions (31, 33) spaced along a first axis (52), with the first end portion (31) of the coupling member (3) adapted to be coupled to a tool;
a body (1) including a rounded base (11) and a drive column (12) spaced along a second axis (54), with the rounded base (11) being pivotably mounted to the second end portion (33) of the coupling member (3) about a pivot axis (56) perpendicular to the first axis (52), allowing adjustment in an angle between the first and second axes (52, 54), **characterized in that** the body (1) further including a reinforcing section (13) that is intermediate the rounded base (11) and the drive column (12) along the second axis (54) and a neck (112) intermediate the rounded base (11) and the reinforcing section (13), with the rounded base (11) having a reduced radial extent about the second axis (54) towards the neck (112), with the body having an increased radial extent about the second axis (54) from the neck (112) to the reinforcing section (13), the reinforcing section (13) including an outer periphery about the second axis (54) of a radial extent greater than that of the drive column (12) and the neck (112) about the second axis (54), the outer periphery of the reinforcing section (13) including a recessed portion (14) having a receptacle (131) extending in a radial direction perpendicular to the second axis (54), the drive column (12) including a bore (121) extending along the second axis (54) and in communication with the receptacle (131), the drive column (12) further including a detent hole (122) extending in a transverse direction transverse to and in communication with the bore (121), a mover (40) movably received in the bore (121) along the second axis (54), a detent member (50) movably received in the detent hole (122) to be movable in the transverse direction, the detent member (50) operably connected to the mover (40) so that movement of the mover (40) along the second axis (54) allows movement of the detent member (50) in the transverse direction between a protruded position at least partially outside of the detent hole (122) and a retracted position in the detent hole (122), with the drive column (12) being adapted to couple with an object to be driven when the detent member (50) protrudes out of the detent hole (122), with the drive column (12) disengageable from the object when the detent member (50) is received in the detent hole (122); and
a control member (20) slidably received in the receptacle (131) to be slidable between first and second positions spaced in the radial direction, with the control member (20) including inner and outer ends (21, 22) spaced in the radial direction, with the outer end (22) of the control member (20) in the first position having a first spacing to the second axis (54) in the radial direction larger than a second spacing from the outer end (22) of the control member (20) in the second position to the second axis (54) in the radial direction, the first spacing being substantially not larger than a third spacing from the outer periphery of the reinforcing section (13) to the second axis (54) in the radial direction, wherein an inner end (21) of the control member (20) is operably engaged with the mover (40), so that movement of the control member (20) in the radial direction of reinforcing section (13) between the first and second positions allows movement of the detent member (50) in the transverse direction between the protruded position and the retracted position through movement of the mover (40) along the second axis (54).

2. The universal joint as claimed in claim 1, with the control member (20) further including a stepped groove (23) intermediate inner and outer ends (21, 22) of the control member (20), the groove (23) including first and second sliding faces (24, 25) and first and second abutting faces (26, 27), the first and second sliding faces (24, 25) parallel to each other and extending in a direction inclined to the radial direction, the first and second abutting faces (26, 27) parallel to each other and extending in a direction transverse to the first and second sliding faces (24, 25), the second sliding face (25) obliquely extending intermediate the first and second abutting faces (26, 27) to be displaced in the radial direction toward the second axis (54), the second abutting surface (26) located intermediate the first and second sliding faces (24, 25) and extend in the radial direction toward the second axis (54), the second abutting face (27) located intermediate the second sliding face (25) and the outer end (22) of the control member (20) and extend in the radial direction, the first sliding face (24) located intermediate the first abutting face (26) and the inner end (21) of the control member (20), the mover (40) including first and second end portions (41, 42) spaced along the second axis (54), with the second end portion (42) of the mover (40) moveably received in the groove (23) of the control member (20), with the second end portion (42) of the mover (40) including a pressing face (422) and a third sliding face (421), with the universal joint further comprising, in combination: a first spring (30) received in the receptacle (131) of the reinforcing section (13) and biasing the control member (20) to the first position,
wherein when the control member (20) is in the first position, the third sliding face (421) abuts the first sliding face (24), and the pressing face (422) is spaced from the first abutting face (26) along the second axis (54), and
wherein when the control member (20) is in the second position, the third sliding face (421) abuts the second sliding face (25).

3. The universal joint as claimed in claim 2, the detent member (50) protruding out of the detent hole (122) when the third sliding face (421) abuts the first sliding face (24) and when the pressing face (422) abuts the first abutting face (26), preventing the object from disengaging from the drive column (12).

4. The universal joint as claimed in claim 2 or 3, wherein each of the first and second abutting faces (26, 27) are planar and extend in the radial direction, the pressing face (422) abutting the second abutting face (27) when the control member (20) is in the first position.

5. The universal joint as claimed in claim 2, 3 or 4, wherein the first sliding face (25) is interconnected between the first and second abutting faces (26, 27), the first abutting surface (26) is interconnected between the first and second sliding faces (24, 25), and each of the first and second sliding faces (24, 25) extend in at a first acute angle with respect to the radial direction and at a second acute angle with respect to the second axis (54).

6. The universal joint as claimed in any of the claims 2 to 5, wherein the third sliding face (421) of the mover (40) extends intermediate the pressing face (422) and the first end portion (41) of the mover (40) across the second axis (54), and the pressing face (422) is planar and perpendicular to the second axis (54) and parallel to the first and second abutting faces (26, 27).

7. The universal joint as claimed in claim 6, wherein the third sliding face (421) is planar and at a third acute angle with respect to the radial direction and at a fourth acute angle with respect to the second axis (54), the third acute angle being equal to the first acute angle, and the fourth acute angle being equal to the second acute angle.

8. The universal joint as claimed in any of the claims 1 to 7, the rounded base (11) including a through-hole (111), the second end portion (33) of the coupling member (3) including a compartment (32) having an outer section (36) and an inner section (34) intermediate the outer section (36) and the first end portion (31) of the coupling member (3) along the first axis (52), the rounded base (11) pivotably received in the outer section (36), the universal joint further comprising, in combination: a pin (4) defining the pivot axis (56) and extending through the second end portion (33) of the coupling member (3) along the pivot axis (56) and through the through-hole (111), thereby pivotably connecting the rounded base (11) to the second end portion (33) of the coupling member (3); and a second spring (6) being received in the inner section (34) and biasing the rounded base (11) away from the inner section (34).

9. The universal joint as claimed in claim 8, the through-hole (111) including first and second sectors (116) on opposite sides of the second axis (54), the first sector (116) including first and second sidewalls (113, 114) spaced along the second axis (54), the second sidewall (114) of the first sector (116) intermediate the first sidewall (113) of the first sector (116) and the reinforcing section (13) along the second axis (54), the second sector (116) including third and fourth sidewalls (113, 114) spaced along the second axis (54), the third sidewall (113) of the second sector (116) intermediate the fourth sidewall (114) of the second sector (116) and the reinforcing section (13) along the second axis (54), the first sidewall (113) of the first sector (116) perpendicular to the fourth sidewall (114) of the second sector (116), the second sidewall (114) of the first sector (116) perpendicular to the third sidewall (113) of the second sector (116), the first sidewall (113) of the first sector (116) parallel to and spaced from the third sidewall (113) of the second sector (116) and at a fifth acute angle with the second axis (54), and the second sidewall (114) of the first sector (116) parallel to and spaced from the fourth sidewall (114) of the second sector (116) and at a sixth acute angle with the second axis (54) the same as the fifth acute angle.

10. The universal joint as claimed in any of the claims 2 to 9, the outer end (22) of the control member (20) having a first length (T1) along the second axis (54), the reinforcing section (13) having a second length (T2) along the second axis (54), and the second length (T2) being larger than the first length (T1).

11. The universal joint as claimed in any of claims 1 to 10, wherein the mover (40) includes a combined groove (411) having a spherical bottom portion and an obliquely inclined bottom portion cooperating with the detent member (50) to allow said movement of the detent member (50) between a protruded position and a retracted position by an axial movement of the mover (40).

## Patentansprüche

1. Kreuzgelenk mit in Kombination:
einem Kupplungselement (3), welches einen ersten und einen zweiten Endabschnitt (31, 33) aufweist, die entlang einer ersten Achse (52) im Abstand sind, wobei der erste Endabschnitt (31) des Kupplungselements (3) angepasst ist, um mit einem Werkzeug gekuppelt zu werden,
einem Körper (1), der eine abgerundeten Basis (11) und einen Antriebsschaft (12) aufweist, die entlang einer zweiten Achse (54) im Abstand sind, wobei die abgerundete Basis (11) an dem zweiten Endabschnitt (33) des Kupplungselements (3) um eine Schwenkachse (56) herum schwenkbar montiert ist, die zu der ersten Achse (52) senkrecht ist, erlaubend eine WinkelEinstellung zwischen der ersten und der zweiten Achse (52, 54), **dadurch gekennzeichnet, dass** der Körper (1) ferner aufweist einen Verstärkungsabschnitt (13), der entlang der zweiten Achse (54) zwischen der abgerundeten Basis (11) und dem Antriebsschaft (12) ist, und einen Hals (112), der zwischen der abgerundeten Basis (11) und dem Verstärkungsabschnitt (13) ist, wobei die abgerundete Basis (11) zu dem Hals (112) hin eine reduzierte radiale Erstreckung um die zweite Achse (54) hat, wobei der Körper von dem Hals (112) aus zu dem Verstärkungsabschnitt (13) hin eine vergrößerte radiale Erstreckung um die zweite Achse (54) hat, wobei der Verstärkungsabschnitt (13) einen Außenumfang um die zweite Achse (54) mit einer radialen Erstreckung hat, die größer als jene des Antriebsschafts (12) und des Halses (112) um die zweite Achse (54) ist, wobei der Außenumfang des Verstärkungsabschnitts (13) einen Aussparungsabschnitt (14) mit einer Aufnahme (131) aufweist, die sich in radialer Richtung senkrecht zu der zweiten Achse (54) erstreckt, wobei der Antriebsschaft (12) eine Bohrung (121) aufweist, die sich entlang der zweiten Achse (54) erstreckt und in Kommunikation mit der Aufnahme (131) ist, wobei der Antriebsschaft (12) ferner aufweist ein Raste-Loch (122), das sich in eine Querrichtung quer zu und in Kommunikation mit der Bohrung (121) erstreckt, ein Bewegerteil (40), welches in der Bohrung (121) entlang der zweiten Achse (54) bewegbar aufgenommen ist, und ein Rastelement (50), welches in dem Raste-Loch (122) bewegbar aufgenommen ist, um der Querrichtung bewegbar zu sein, wobei das Rastelement (50) operativ mit dem Bewegerteil (40) verbunden ist, so dass eine Bewegung des Bewegerteils (40) entlang der zweiten Achse (54) eine Bewegung des Rastelements (50) in der Querrichtung erlaubt zwischen einer Vorsprungposition wenigstens teilweise außerhalb des Raste-Lochs (122) und einer Einzugsposition in dem Raste-Loch (122), wobei der Antriebsschaft (12) eingerichtet ist, um mit einem anzutreibenden Objekt zu kuppeln, wenn das Rastelement (50) aus dem Raste-Loch (122) vorsteht, wobei der Antriebsschaft (12) von dem Objekt außer Eingriff bringbar ist, wenn das Rastelement (50) in dem Raste-Loch (122) aufgenommen ist, und
ein Steuerelement (20), das in der Aufnahme (131) verschiebbar aufgenommen ist, um zwischen einer ersten und einer zweiten Position verschiebbar zu sein, die in der radialen Richtung im Abstand sind, wobei das Steuerelement (20) ein inneres und ein äußeres Ende (21, 22) aufweist, die in der radialen Richtung im Abstand sind, wobei in der ersten Position das äußere Ende (22) des Steuerelements (20) einen ersten Abstand zu der zweiten Achse (54) in der radialen Richtung hat, der größer als ein zweiter Abstand von dem äußeren Ende (22) des Steuerelements (20) aus zu der zweiten Achse (54) in der radialen Richtung in der zweiten Position ist, wobei der erste Abstand im Wesentlichen nicht größer als ein dritter Abstand von dem Außenumfang des Verstärkungsabschnitts (13) aus zu der zweiten Achse (54) in radialer Richtung ist, wobei ein inneres Ende (21) des Steuerelements (20) operativ im Eingriff mit dem Bewegerteil (40) ist, sodass eine Bewegung des Steuerelements (20) in der radialen Richtung des Verstärkungsabschnitts (13) zwischen der ersten und der zweiten Position eine Bewegung des Rastelements (50) in der Querrichtung zwischen der Vorsprungposition und der Einzugsposition erlaubt durch Bewegung des Bewegerteils (40) entlang der zweiten Achse (54).

2. Kreuzgelenk gemäß Anspruch 1, wobei das Steuerelement (20) ferner aufweist eine gestufte Nut (23) zwischen dem inneren und dem äußeren Ende (21, 22) des Steuerelements (20), wobei die Nut (23) aufweist eine erste und eine zweite Gleitfläche (24, 25) und eine erste und eine zweite Anschlagfläche (26, 27), wobei die erste und die zweite Gleitfläche (24, 25) parallel zueinander sind und sich in eine Richtung geneigt zu der radialen Richtung erstrecken, wobei die erste und die zweite Anschlagfläche (26, 27) parallel zueinander sind und sich in einer Richtung quer zu der ersten und der zweiten Gleitfläche (24, 25) erstrecken, wobei die zweite Gleitfläche (25) sich zwischen der ersten und der zweiten Anschlagfläche (26, 27) geneigt erstreckt, um in der radialen Richtung zu der zweiten Achse (54) hin verlagert zu sein, wobei die zweite Anschlagfläche (26) zwischen der ersten und der zweiten Gleitfläche (24, 25) angeordnet ist und sich in der radialen Richtung zu der zweiten Achse (54) hin erstreckt, wobei die zweite Anschlagfläche (27) zwischen der zweiten Gleitfläche (25) und dem äußeren Ende (22) des Steuerelements (20) angeordnet ist und sich in der radialen Richtung erstreckt, wobei die erste Gleitfläche (24) zwischen der ersten Anschlagfläche (26) und dem inneren Ende (21) des Steuerelements (20) angeordnet ist, wobei das Bewegerteil (40) einen ersten und einen zweiten Endabschnitt (41, 42) aufweist, die entlang der zweiten Achse (54) im Abstand sind, wobei der zweite Endabschnitt (42) des Bewegerteils (40) in der Nut (23) des Steuerelements (20) bewegbar aufgenommen ist, wobei der zweite Endabschnitt (42) des Bewegerteils (40) eine Drückfläche (422) und eine dritte Gleitfläche (421) aufweist, wobei das Kreuzgelenk ferner in Kombination aufweist: eine erste Feder (30), die in der Aufnahme (131) des Verstärkungsabschnitts (13) aufgenommen ist und das Steuerelement (20) zu der ersten Position hin vorspannt, wobei, wenn das Steuerelement (20) in der ersten Position ist, die dritte Gleitfläche (421) an der ersten Gleitfläche (24) anliegt und die Drückfläche (422) im Abstand von der ersten Anschlagfläche (26) entlang der zweiten Achse (54) ist, und wobei, wenn das Steuerelement (20) in der zweiten Position ist, die dritte Gleitfläche (421) an der zweiten Gleitfläche (25) anliegt.

3. Kreuzgelenk gemäß Anspruch 2, wobei das Rastelement (50) aus dem Raste-Loch (122) vorsteht, wenn die dritte Gleitfläche (421) an der ersten Gleitfläche (24) anliegt und wenn die Drückfläche (422) an der ersten Anschlagfläche (26) anliegt, wodurch verhindert wird, dass das Objekt von dem Antriebsschaft (12) außer Eingriff kommt.

4. Kreuzgelenk gemäß Anspruch 2 oder 3, wobei jede der ersten und der zweiten Anschlagflächen (26, 27) eben ist und sich in radialer Richtung erstreckt, wobei die Drückfläche (422) an der zweiten Anschlagfläche (27) anliegt, wenn das Steuerelement (20) in der ersten Position ist.

5. Kreuzgelenk gemäß Anspruch 2, 3 oder 4, wobei die erste Gleitfläche (25) zwischen die erste und die zweite Anschlagfläche (26, 27) verbunden ist, wobei die erste Anschlagfläche (26) zwischen die erste und die zweite Gleitfläche (24, 25) verbunden ist, und wobei jede von der ersten und der zweiten Gleitfläche (24, 25) sich in einem ersten Schrägwinkel bezüglich der radialen Richtung und in einem zweiten Schrägwinkel bezüglich der zweiten Achse (54) erstreckt.

6. Kreuzgelenk gemäß irgendeinem der Ansprüche 2 bis 5, wobei die dritte Gleitfläche (421) des Bewegerteils (40) sich zwischen der Drückfläche (422) und dem ersten Endabschnitt (41) des Bewegerteils (40) quer zur zweiten Achse (54) erstreckt, und wobei die Drückfläche (422) eben und senkrecht zu der zweiten Achse (54) und parallel zu der ersten und der zweiten Anschlagfläche (26, 27) ist.

7. Kreuzgelenk gemäß Anspruch 6, wobei die dritte Gleitfläche (421) eben und in einem dritten Schrägwinkel bezüglich der radialen Richtung und in einem vierten Schrägwinkel bezüglich der zweiten Achse (54) ist, wobei der dritte Schrägwinkel gleich dem ersten Schrägwinkel ist, und wobei der vierte Schrägwinkel gleich dem zweiten Schrägwinkel ist.

8. Kreuzgelenk gemäß irgendeinem der Ansprüche 1 bis 7, wobei die abgerundete Basis (11) ein Durchgangsloch (111) aufweist, wobei der zweite Endabschnitt (33) des Kupplungselements (3) einen Aufnahmeraum (32) mit einem äußeren Abschnitt (36) und einem inneren Abschnitt (34) zwischen dem äußeren Abschnitt (36) und dem ersten Endabschnitt (31) des Kupplungselements (3) entlang der ersten Achse (52) aufweist, wobei die abgerundete Basis (11) in dem äußeren Abschnitt (36) schwenkbar aufgenommen ist, wobei das Kreuzgelenk ferner in Kombination aufweist: einen Stift (4), der die Schwenkachse (56) definiert und der sich durch den zweiten Endabschnitt (33) des Kupplungselements (3) entlang der Schwenkachse (56) und durch das Durchgangsloch (111) hindurch erstreckt, wodurch die abgerundete Basis (11) schwenkbar mit dem zweiten Endabschnitt (33) des Kupplungselements (3) verbunden ist, und wobei eine zweite Feder (6) in dem inneren Abschnitt (34) aufgenommen ist und die abgerundete Basis (11) von dem inneren Abschnitt (34) weg vorspannt.

9. Kreuzgelenk gemäß Anspruch 8, wobei das Durchgangsloch (111) einen ersten und einen zweiten Abschnitt (116) an entgegengesetzten Seiten der zweiten Achse (54) aufweist, wobei der erste Abschnitt (116) eine erste und eine zweite Seitenwand (113, 114) aufweist, die entlang der zweiten Achse (54) im Abstand sind, wobei die zweite Seitenwand (114) des ersten Abschnitts (116) zwischen der ersten Seitenwand (113) des ersten Abschnitts (116) und dem Verstärkungsabschnitt (13) entlang der zweiten Achse (54) ist, wobei der zweite Abschnitt (116) eine dritte und eine vierte Seitenwand (113, 114) aufweist, die entlang der zweiten Achse (54) im Abstand sind, wobei die dritte Seitenwand (113) des zweiten Abschnitts (116) zwischen der vierten Seitenwand (114) des zweiten Abschnitts (116) und dem Verstärkungsabschnitt (13) entlang der zweiten Achse (54) ist, wobei die erste Seitenwand (113) des ersten Abschnitts (116) senkrecht zur vierten Seitenwand (114) des zweiten Abschnitts (116) ist, wobei die zweite Seitenwand (114) des ersten Abschnitts (116) senkrecht zu der dritten Seitenwand (113) des zweiten Abschnitts (116) ist, wobei die erste Seitenwand (113) des ersten Abschnitts (116) parallel zu und im Abstand von der dritten Seitenwand (113) des zweiten Abschnitts (116) und in einem fünften Schrägwinkel mit der zweiten Achse (54) ist, und wobei die zweite Seitenwand (114) des ersten Abschnitts (116) parallel zu und im Abstand zu der vierten Seitenwand (114) des zweiten Abschnitts (116) und in einem sechsten Schrägwinkel, der gleiche wie der fünfte Schrägwinkel, mit der zweiten Achse (54) ist.

10. Kreuzgelenk gemäß irgendeinem der Ansprüche 2 bis 9, wobei das äußere Ende (22) des Steuerelements (20) eine erste Länge (T1) entlang der zweiten Achse (54) hat, wobei das Verstärkungselement (13) eine zweite Länge (T2) entlang der zweiten Achse (54) hat, und wobei die zweite Länge (T2) größer als die erste Länge (T1) ist.

11. Kreuzgelenk gemäß irgendeinem der Ansprüche 1 bis 10, wobei das Bewegerteil (40) eine kombinierte Nut (411) mit einem sphärischen unteren Abschnitt und einem schräg geneigten unteren Abschnitt hat, die mit dem Rastelement (50) zusammenwirkt, um die Bewegung des Rastelements (50) zwischen einer Vorsprungposition und einer Einzugsposition durch eine Axialbewegung des Bewegungsteils (40) zu erlauben.

## Revendications

1. Joint universel comprenant, en association :
un élément d'accouplement (3) qui comprend des première et deuxième parties d'extrémité (31, 33) espacées le long d'un premier axe (52), la première partie d'extrémité (31) de l'élément d'accouplement (3) étant adaptée de façon à être accouplée à un outil ;
un corps (1) qui comprend une base arrondie (11) et une colonne d'entraînement (12) espacée le long d'un second axe (54), la base arrondie (11) étant montée de manière pivotante sur la deuxième partie d'extrémité (33) de l'élément d'accouplement (3) autour d'un d'axe de pivot (56) perpendiculaire au premier axe (52), en permettant un réglage selon un angle entre les premier et second axes (52, 54), **caractérisé en ce que** le corps (1) comprend en outre une section renforcement (13) qui est en position intermédiaire entre la base arrondie (11) et la colonne d'entraînement (12) le long du second axe (54) et un col (112) qui est en position intermédiaire entre la base arrondie (11) et la section renforcement (13), la base arrondie (11) présentant une étendue radiale réduite autour du second axe (54) vers le col (112), le corps présentant une étendue radiale accrue autour du second axe (54) à partir du col (112) vers la section renforcement (13), la section renforcement (13) comprenant une périphérie extérieure autour du second axe (54) qui présente une étendue radiale supérieure à celle de la colonne d'entraînement (12) et du col (112) autour du second axe (54), la périphérie extérieure de la section renforcement (13) comprenant une partie renfoncée (14) qui présente un réceptacle (131) qui s'étend dans une direction radiale perpendiculaire au second axe (54), la colonne d'entraînement (12) comprenant un alésage (121) qui s'étend le long du second axe (54) et qui est en communication avec le réceptacle (131), la colonne d'entraînement (12) comprenant en outre un trou de détente (122) qui s'étend dans une direction transversale qui est transversale à l'alésage (121) et en communication avec celui-ci, un dispositif de déplacement (40) reçu de manière mobile dans l'alésage (121) le long du second axe (54), un élément de détente (50) reçu de manière mobile dans le trou de détente (122) de façon à pouvoir se déplacer dans la direction transversale, l'élément de détente (50) étant relié de manière opérationnelle au dispositif de déplacement (40) de telle sorte que le déplacement du dispositif de déplacement (40) le long du second axe (54) permet un déplacement de l'élément de détente (50) dans la direction transversale entre une position en saillie, au moins en partie en dehors du trou de détente (122), et une position rétractée dans le trou de détente (122), la colonne d'entraînement (12) étant adaptée de façon à s'accoupler à un objet à entraîner lorsque l'élément de détente (50) fait saillie hors du trou de détente (122), la colonne d'entraînement (12) pouvant être mise hors de prise de l'objet lorsque l'élément de détente (50) est reçu dans le trou de détente (122) ; et
un élément de commande (20) reçu de manière coulissante dans le réceptacle (131) de façon à pouvoir coulisser entre les première et deuxième positions espacées dans la direction radiale, l'élément de commande (20) comprenant des extrémités intérieure et extérieure (21, 22) espacées dans la direction radiale, l'extrémité extérieure (22) de l'élément de commande (20) dans la première position présentant un premier espacement jusqu'au second axe (54) dans la direction radiale plus grand qu'un deuxième espacement entre l'extrémité extérieure (22) de l'élément de commande (20) dans la deuxième position et le second axe (54) dans la direction radiale, le premier espacement n'étant pas sensiblement plus grand qu'un troisième espacement entre la périphérie extérieure de la section renforcement (13) et le second axe (54) dans la direction radiale, dans lequel une extrémité intérieure (21) de l'élément de commande (20) est mise en prise de manière opérationnelle avec le dispositif de déplacement (40), de telle sorte que le déplacement de l'élément de commande (20) dans la direction radiale de la section renforcement (13) entre les première et deuxième positions permet un déplacement de l'élément de détente (50) dans la direction transversale de la position en saillie à la position rétractée grâce au déplacement du dispositif de déplacement (40) le long du second axe (54).

2. Joint universel selon la revendication 1, dans lequel l'élément de commande (20) comprend en outre une rainure étagée (23) en position intermédiaire entre les extrémités intérieure et extérieure (21, 22) de l'élément de commande (20), la rainure (23) comprenant des première et deuxième faces coulissantes (24, 25) et des première et deuxième faces de mise en butée (26, 27), les première et deuxième faces coulissantes (24, 25) étant parallèles l'une par rapport à l'autre et s'étendant dans une direction inclinée par rapport à la direction radiale, les première et deuxième faces de mise en butée (26, 27) étant parallèles l'une par rapport à l'autre et s'étendant dans une direction transversale par rapport aux première et deuxième faces coulissantes (24, 25), la deuxième face coulissante (25) s'étendant de manière oblique, en position intermédiaire entre les première et deuxième faces de mise en butée (26, 27) à déplacer dans la direction radiale vers le second axe (54), la deuxième face de mise en butée (26) étant située en position intermédiaire entre les première et deuxième faces coulissantes (24, 25) et s'étendant dans la direction radiale vers le second axe (54), la deuxième face de mise en butée (27) étant en position intermédiaire entre la deuxième face coulissante (25) et l'extrémité extérieure (22) de l'élément de commande (20) et s'étendant dans la direction radiale, la première face coulissante (24) étant en position intermédiaire entre la première face de mise en butée (26) et l'extrémité intérieure (21) de l'élément de commande (20), le dispositif de déplacement (40) comprenant des première et deuxième parties d'extrémité (41, 42) espacées le long du second axe (54), la deuxième partie d'extrémité (42) du dispositif de déplacement (40) étant reçue de manière mobile dans la rainure (23) de l'élément de commande (20), la deuxième partie d'extrémité (42) de l'élément de déplacement (40) comprenant une face de pression (422) et une troisième face coulissante (421), le joint universel comprenant en outre, en association : un premier ressort (30) reçu dans le réceptacle (131) de la section renforcement (13) et sollicitant l'élément de commande (20) vers la première position ;
dans lequel, lorsque l'élément de commande (20) se situe dans la première position, la troisième face coulissante (421) vient en butée contre la première face coulissante (24), et la face de pression (422) est espacée de la première face de mise en butée (26) le long du second axe (54) ; et
dans lequel, lorsque l'élément de commande (20) se situe dans la deuxième position, la troisième face coulissante (421) vient en butée contre la deuxième face coulissante (25).

3. Joint universel selon la revendication 2, dans lequel l'élément de détente (50) fait saillie hors du trou de détente (122) lorsque la troisième face coulissante (421) vient en butée contre la première face coulissante (24) et lorsque la face de pression (422) vient en butée contre la première face de mise en butée (26), en empêchant l'objet d'être mis hors de prise de la colonne d'entraînement (12).

4. Joint universel selon la revendication 2 ou la revendication 3, dans lequel chacune des première et deuxième faces de mise en butée (26, 27) est plane et s'étend dans la direction radiale, la face de pression (422) venant en butée contre la deuxième face de mise en butée (27) lorsque l'élément de commande (20) se situe dans la première position.

5. Joint universel selon l'une quelconque des revendications 2 à 4, dans lequel la première face coulissante (25) est située entre et relie les première et deuxième faces de mise en butée (26, 27), la première face de mise en butée (26) est située entre et relie les première et deuxième faces coulissantes (24, 25), et chacune des première et deuxième faces coulissantes (24, 25) s'étend en formant un premier angle aigu avec la direction radiale et en formant un second angle aigu avec le second axe (54).

6. Joint universel selon l'une quelconque des revendications 2 à 5, dans lequel la troisième face coulissante (421) du dispositif de déplacement (40) s'étend, intermédiaire entre la face de pression (422) et la première partie d'extrémité (41) du dispositif de déplacement (40), d'un côté à l'autre du second axe (54), et la face de pression (422) est plane et perpendiculaire par rapport au second axe (54) et parallèle aux première et deuxième faces de mise en butée (26, 27).

7. Joint universel selon la revendication 6, dans lequel la troisième face coulissante (421) est plane et forme un troisième angle aigu avec la direction radiale et un quatrième angle aigu avec le second axe (54), le troisième angle aigu étant égal au premier angle aigu, et le quatrième angle aigu étant égal au deuxième angle aigu.

8. Joint universel selon l'une quelconque des revendications 1 à 7, dans lequel la base arrondie (11) comprend un trou traversant (111), la deuxième partie d'extrémité (33) de l'élément d'accouplement (3) comprenant un compartiment (32) qui présente une section extérieure (36) et une section intérieure (34) qui est en position intermédiaire entre la section extérieure (36) et la première partie d'extrémité (31) de l'élément d'accouplement (3) le long du premier axe (52), la base arrondie (11) étant reçue de manière pivotante dans la section extérieure (36), le joint universel comprenant en outre, en association : une broche (4) qui définit l'axe de pivot (56) et s'étend à travers la deuxième partie d'extrémité (33) de l'élément d'accouplement (3) le long de l'axe de pivot (56) et à travers le trou traversant (111), en connectant de ce fait de manière pivotante la base arrondie (11) à la deuxième partie d'extrémité (33) de l'élément d'accouplement (3) ; et un second ressort (6) reçu dans la section intérieure (34) et sollicitant la base arrondie (11) en l'éloignant de la section intérieure (34).

9. Joint universel selon la revendication 8, dans lequel le trou traversant (111) comprend des premier et second secteurs (116) situés sur des côtés opposés du second axe (54), le premier secteur (116) comprenant des première et deuxième parois latérales (113, 114) espacées le long du second axe (54), la deuxième paroi latérale (114) du premier secteur (116) présentant une position intermédiaire entre la première paroi latérale (113) du premier secteur (116) et la section renforcement (13) le long du second axe (54), le second secteur (116) comprenant des troisième et quatrième parois latérales (113, 114) espacées le long du second axe (54), la troisième paroi latérale (113) du second secteur (116) présentant une position intermédiaire entre la quatrième paroi latérale (114) du second secteur (116) et la section renforcement (13) le long du second axe (54), la première paroi latérale (113) du premier secteur (116) étant perpendiculaires à la quatrième paroi latérale (114) du second secteur (116), la deuxième paroi latérale (114) du premier secteur (116) étant perpendiculaires à la troisième paroi latérale (113) du second secteur (116), la première paroi latérale (113) du premier secteur (116) étant parallèle à, et espacée de la troisième paroi latérale (113) du second secteur (116) et formant un cinquième angle aigu avec le second axe (54), et la deuxième paroi latérale (114) du premier secteur (116) étant parallèle à et espacée de la quatrième paroi latérale (114) du second secteur (116) et formant un sixième angle aigu avec le second axe (54), identique au cinquième angle aigu.

10. Joint universel selon l'une quelconque des revendications 2 à 9, dans lequel l'extrémité extérieure (22) de l'élément de commande (20) présente une première longueur (T1) le long du second axe (54), la section renforcement (13) présente une seconde longueur (T2) le long du second axe (54), et la seconde longueur (T2) est plus grande que la première longueur (T1).

11. Joint universel selon l'une quelconque des revendications 1 à 10, dans lequel le dispositif de déplacement (40) comprend une rainure combinée (411) qui présente une partie inférieure sphérique et une partie inférieure inclinée de manière oblique coopérant avec l'élément de détente (50) de façon à permettre ledit déplacement de l'élément de détente (50) d'une position en saillie à une position rétractée par un déplacement axial du dispositif de déplacement (40).
